# EUROPEAN PATENT SPECIFICATION

(11) **EP 3 087 532 B1**
(45) Date of publication and mention of the grant of the patent: **06.09.2023**
(21) Application number: 14786656.0
(22) Date of filing: 17.10.2014
(51) Int. Cl.: G06V 10/20, G06V 20/56

(54) **METHOD FOR DETERMINING A WIDTH OF A TARGET VEHICLE BY MEANS OF A CAMERA SYSTEM OF A MOTOR VEHICLE, CAMERA SYSTEM AND MOTOR VEHICLE**
VERFAHREN ZUR BESTIMMUNG EINER BREITE EINES ZIELFAHRZEUGS MITTELS EINES KAMERASYSTEMS EINES KRAFTFAHRZEUGS, KAMERASYSTEM UND KRAFTFAHRZEUG
PROCÉDÉ PERMETTANT DE DÉTERMINER LA LARGEUR D'UN VÉHICULE CIBLE AU MOYEN D'UN SYSTÈME DE CAMÉRA D'UN VÉHICULE À MOTEUR, SYSTÈME DE CAMÉRA ET VÉHICULE À MOTEUR

(30) Priority: 23.12.2013 DE 102013022076
(43) Date of publication of application: 02.11.2016
(73) Proprietor: Valeo Schalter und Sensoren GmbH, 74321 Bietigheim-Bissingen (DE)
(72) Inventor: CHANUSSOT, Lowik, F-75019 Paris (FR)
(74) Representative: Claassen, Maarten Pieter
(86) International application number: PCT/EP2014/072319
(87) International publication number: WO 2015/096911

(56) References cited:
- GB-A- 2 484 398
- US-A1- 2007 154 068
- CHARKARI N M ET AL: "A new approach for real time moving vehicle detection", INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US, vol. 1, 26 July 1993 (1993-07-26), pages 273-278, XP010219078, DOI: 10.1109/IROS.1993.583109 ISBN: 978-0-7803-0823-7
- AGARWAL S ET AL: "Learning to Detect Objects in Images via a Sparse, Part-Based Representation", IEEE TRANSACTIONS ON PATTERN ANALYSIS AND MACHINE INTELLIGENCE, IEEE COMPUTER SOCIETY, USA, vol. 26, no. 11, 1 November 2004 (2004-11-01), pages 1475-1490, XP011118904, ISSN: 0162-8828, DOI: 10.1109/TPAMI.2004.108
- CHIH-CHIUN LAI ET AL: "Location estimation and trajectory prediction of moving lateral vehicle using two wheel shapes information in 2-D lateral vehicle images by 3-D computer vision techniques", PROCEEDINGS / 2003 IEEE INTERNATIONAL CONFERENCE ON ROBOTICS AND AUTOMATION : SEPTEMBER 14 - 19, 2003, THE GRAND HOTEL, TAIPEI, TAIWAN; [PROCEEDINGS OF THE IEEE INTERNATIONAL CONFERENCE ON ROBOTICS AND AUTOMATION], IEEE SERVICE CENTER, PISCATAWAY, NJ, vol. 1, 14 September 2003 (2003-09-14), pages 881-886, XP010666915, DOI: 10.1109/ROBOT.2003.1241704 ISBN: 978-0-7803-7736-3

## Description

The invention relates to a method for determining a width of a target vehicle by means of a camera system of a motor vehicle, wherein an image of an environmental region of the motor vehicle is provided by a camera of the camera system and the width of the target vehicle in the image is determined by an image processing device of the camera system. In addition, the invention relates to a camera system formed for performing such a method as well as to a motor vehicle with such a camera system.

Presently, the interest is in particular directed to tracking target vehicles with the aid of a front camera of a motor vehicle. Therein, front cameras for motor vehicles are already known from the prior art and usually capture images of an environmental region in front of the motor vehicle. This sequence of images is processed by means of an electronic image processing device, which detects target objects in the images. To this, the images are subjected to an object detection algorithm. Such detection algorithms are already prior art and are for example based on pattern recognition. In order to detect a target object, first, so-called characteristic points can be extracted from the image and then a target object can be identified based on these characteristic points. As an example, the following algorithms can therein be mentioned: AdaBoost and HOG-SVM.

If a target object is identified in an image of the camera, thus, this target object can also be tracked over the subsequent images of the sequence. Therein, the target object is detected in each image, wherein the detection in the current image has to be associated with the detection from the previous image. By tracking the target object, the current position of the target object in the image frame and thus also the current relative position of the target object with respect to the motor vehicle are always known. Therein, for example the Lucas-Kanade method can be used as the tracking algorithm.

A mentioned camera system with a front camera can be used as a collision warning system, by means of which the driver can be warned of a risk of collision with the target object. Such a collision warning system can for example output warning signals in order to acoustically and/or optically and/or haptically inform the driver about the detected risk of collision. Additionally or alternatively, the camera system can also be used as an automatic brake assistance system, which is adapted to perform automatic brake interventions of the motor vehicle due to the detected risk of collision. Therein, for example, the so-called time to collision can be used as a measure of the current risk of collision, that is a period of time, which is presumably needed by the motor vehicle to reach the target object. This time to collision can be calculated from the estimated distance of the target object as well as from the relative speed.

The known detection algorithms serving for detecting target vehicles in the image usually output a rectangular bounding box as the result of detection, which surrounds the detected target vehicle. In this bounding box, thus, the detected target vehicle is depicted, wherein the bounding box specifies the current position as well as the width and the height of the target vehicle in the image. In the known detection algorithms (for example AdaBoost and HOG-SVM), the circumstance can be considered as disadvantageous that the bounding box does only inaccurately specify the current position of the target vehicle in the image as well as the width and the height of the target vehicle. The size of the bounding box can also vary over the sequence of the images, which in turn reduces the accuracy in tracking the target vehicle over the images.

Therefore, methods were developed, by which the size of the bounding box (it is output by the detection algorithm) and thus the position of the target vehicle in the image is refined or finely adjusted. Here, for example a method provides a remedy as it is described in the document EP 1 806 595 B1. In order to be able to more accurately determine the bottom of the bounding box and thus the distance of the target vehicle from the ego motor vehicle, here, it is proposed to detect the wheels of the target vehicle in the image. These wheels then determine the lower edge of the bounding box. For determining the width of the target vehicle, by contrast, exterior points of the target vehicle are determined. This method is disadvantageous in that the exterior points of the target vehicle also may vary over the sequence of the images due to detection errors and the determination of the width of the target vehicle is associated with relatively high noise. The lateral exterior points of the target vehicle cannot always be detected with the required accuracy.

It is an object of the invention to demonstrate a solution, how in a method of the initially mentioned kind, the width of the target vehicle in the image can be particularly precisely and reliably determined in particular in order to be able to reliably warn the driver of the ego motor vehicle of a risk of collision with the target vehicle and/or optionally to be able to decelerate the motor vehicle.

According to the invention, this object is solved by a method, by a camera system as well as by a motor vehicle having the features according to the respective independent claims.

Advantageous implementations of the invention are the subject matter of the dependent claims, of the description and of the figures.

A method according to the invention serves for determining a width of a target vehicle by means of a camera system of a motor vehicle, wherein an image of an environmental region of the motor vehicle is provided by a camera of the camera system and the width of the target vehicle in the image is determined by an image processing device of the camera system. The target vehicle is detected in the image by means of a detection algorithm by the image processing device. The detection includes that a partial region of the image (for example bounding box) is determined by the detection algorithm, in which the target vehicle is depicted. Therein, basically, any detection algorithm can be used such that presently the detection algorithm is not elaborated in more detail. The image processing device then determines a region of interest (ROI) within the partial region such that wheels of a common axle of the target vehicle are depicted in the ROI. The image processing device then identifies respective lateral outer edges of the depicted wheels and determines the width of the depicted target vehicle as the distance between the outer edges.

Accordingly, the invention takes the way of detecting the wheels of the target vehicle as invariant points and of determining the width of the target vehicle in the image based on the lateral outer edges of the wheels. First, a ROI within the partial region (bounding box) is determined, in which the wheels of the target vehicle are presumably depicted. Therein, for example a lower area of the partial region can be defined as the ROI, for which it can be assumed that the wheels of the target vehicle are located in this lower area. Then, the outer edges of the wheels are searched for in this ROI. If these outer edges are identified, a distance between these outer edges is determined and used as the width (in pixels) of the depicted target vehicle. The above mentioned partial region (bounding box) output by the detection algorithm can then be adapted corresponding to the new, more accurate width of the target vehicle. On the one hand, the invention has the advantage that the width of the target vehicle and thus the position of the target vehicle in the image can be particularly precisely determined. Since the tires of the target vehicle are always black, the outer edges of the wheels can always be reliably detected. The acquisition of the width is therefore also particularly precise over a sequence of images. On the other hand, the invention has the advantage that the outer edges of the wheels can be detected without much effort by determining the ROI without the image having to be subjected to pattern recognition. For example, here, filtering of a gradient direction of pixels of a gradient image can be performed, which results in exclusively the outer edges of the wheels remaining as the result of this filtering.

Further, the invention has the advantage that the refinement in position allows to estimate accurately the real distance (in meters) of the target vehicle. Knowing the width (in pixel) and the camera calibration parameters, it is possible to estimate an accurate distance from the target vehicle, which is not influenced by the slope of the road or pitch angle variation.

Preferably, the camera is a front camera, which is in particular disposed behind a windshield of the motor vehicle, for example directly on the windshield in the interior of the motor vehicle. Then, the front camera captures the environment in direction of travel or in vehicle longitudinal direction in front of the motor vehicle. This can in particular imply that a camera axis extending perpendicularly to the plane of the image sensor is oriented parallel to the vehicle longitudinal axis.

Preferably, the camera is a video camera, which is able to provide a plurality of images (frames) per second. The camera can be a CCD camera or a CMOS camera.

If a sequence of images (i.e. video) is provided, thus, the detection algorithm can be applied to each or each n-th image. The target vehicle can then be tracked over the sequence of the images, wherein the width of the target vehicle is determined according to the method according to the invention to each or each n-th image.

The camera system can be a collision warning system, by means of which a degree of risk with respect to a collision of the motor vehicle with the target vehicle is determined and a warning signal is output depending on the current degree of risk, by which the risk of collision is signaled to the driver. Additionally or alternatively, the camera system can also be formed as an automatic brake assistance system, by means of which brake interventions are automatically performed depending on the degree of risk. Therein, for example, the time to collision and/or a distance of the target vehicle from the motor vehicle can be used as the degree of risk.

Preferably, a gradient image - i.e. an edge image - of the ROI is generated such that the outer edges are identified based on the gradient image. For providing the gradient image, for example, the Sobel operator can be used. In order to more accurately determine the position of the edges, therein, the NMS (Non-Maximum Suppression) filtering can also be used. Based on such a gradient image, the outer edges of the wheels, i.e. the left edge of the left wheel as well as the right edge of the right wheel, can be particularly reliably identified without much effort without the image having to be subjected to pattern recognition.

In an embodiment, it is provided that a gradient direction is respectively determined to pixels of the gradient image, which specifies a direction of a brightness change at the respective pixel. Thus, the gradient direction specifies, into which direction the brightness (for example from black to white) changes in the image at the respective pixel. The outer edges can then be identified based on the gradient direction of the pixels. Here, filtering of the pixels with respect to the gradient direction can be performed. Those pixels, at which the brightness changes from bright to dark (from left to right), are interpreted as the left edge of the left wheel. By contrast, those pixels, at which the brightness changes from dark to bright (from left to right), are interpreted as the pixel of the right edge of the right wheel. By such filtering of the gradient direction of the pixels, the outer edges can be precisely detected.

If the width of the target vehicle in the image is known, thus, a real width of the target vehicle can also be determined depending on this width of the target vehicle in the image. Thereby, the relative position of the target vehicle with respect to the motor vehicle and thus the current risk of collision can be even more accurately estimated by the image processing device.

Preferably, therein, a width of a lane in the image (in pixels) is determined on the level of the depicted target vehicle by the image processing device. The real width of the target vehicle can then be determined depending on the width of the lane in the image. If the width of the target vehicle in the image and additionally also the width of the lane in the image on the level of the target vehicle are known, thus, the real width of the target vehicle can be determined considering the real width of the lane. Namely, the ratio of the width of the lane in the image to the real width of the lane is equal to the ratio of the width of the target vehicle in the image to the real width of the target vehicle. The real width of the target vehicle can be calculated from this relation.

The image processing device can identify longitudinal markers of the lane or of the roadway in the image, and the width of the lane (in pixels) can be determined as the distance between the longitudinal markers in the image on the level of the target vehicle. Thus, the width of the lane in the image can be determined without much effort.

Therein, the width of the lane (in pixels) is preferably determined on the level of and thus in extension with a bottom of the wheels in the image. Namely, the bottom of the wheels of the target vehicle defines the lower edge of the above mentioned partial region (bounding box). In order to particularly precisely determine the real width of the target vehicle, the width of the lane also has to be determined in the correct position in the image. In order to ensure this, in this embodiment, the width of the lane is determined along a line, which coincides with the bottom of the wheels of the target vehicle in the image.

In order to calculate the real width of the target vehicle based on the above mentioned ratio, the real width of the lane can also be determined on the basis of the image, in particular based on the longitudinal markers. The real width of the lane can be determined at a very close distance from the ego vehicle and thus not at the level of the target vehicle, but directly in front of the ego vehicle. This is particularly advantageous, since the real width of the lane can be determined without much effort at close distance. Namely, any known lane detection system having a limited range of detection can be used to determine the real width of the lane, and the estimation is not influenced by unknown pitch angle of the ego vehicle or the slope of the road.

In addition, the invention relates to a camera system for a motor vehicle, wherein the camera system is formed for performing a method according to the invention.

A motor vehicle according to the invention, in particular a passenger car, includes a camera system according to the invention.

The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:
- Fig. 1: in schematic illustration a motor vehicle with a camera system according to an embodiment of the invention, wherein a target vehicle is in front of the motor vehicle;
- Fig. 2: in schematic illustration an image, in which the target vehicle is detected;
- Fig. 3: in schematic illustration a region of interest of the image according to Fig. 2;
- Fig. 4: in schematic illustration a gradient image;
- Fig. 5: in schematic illustration the gradient image after filtering with respect to a gradient direction;
- Fig. 6: in schematic illustration the image according to Fig. 2, wherein the width of the target vehicle has been more precisely determined; and
- Fig. 7: in schematic illustration an image, based on which a real width of the target vehicle is determined.

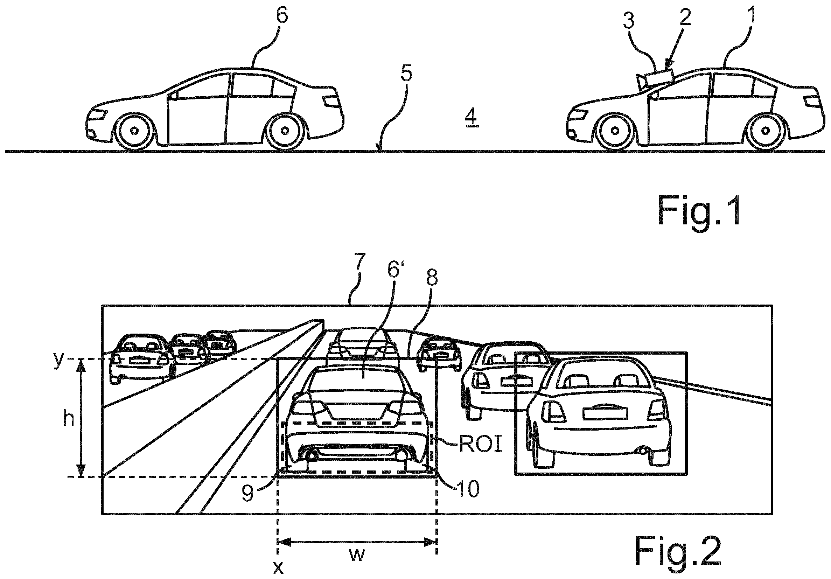

A motor vehicle 1 shown in Fig. 1 is a passenger car in the embodiment. The motor vehicle 1 includes a camera system 2, which for example serves as a collision warning system, by means of which the driver of the motor vehicle 1 can be warned of a risk of collision. Additionally or alternatively, the camera system 2 can be formed as an automatic brake assistance system, by means of which the motor vehicle 1 can be automatically decelerated due to a detected risk of collision.

The camera system 2 includes a camera 3, which is formed as a front camera. The camera 3 is disposed in the interior of the motor vehicle 1 on a windshield of the motor vehicle 1 and captures an environmental region 4 in front of the motor vehicle 1. For example, the camera 3 is a CCD camera or else a CMOS camera. The camera 3 is additionally a video camera, which provides a sequence of images of the environmental region 4 and communicates it to an image processing device not illustrated in the figures.

This image processing device and the camera 3 optionally can also be integrated in a common housing.

As is apparent from Fig. 1, a target vehicle 6 is on a roadway 5 in front of the motor vehicle 1. The image processing device is setup such that it can apply a detection algorithm to the images of the environmental region 4, which is adapted to detect target vehicles 6. This detection algorithm can for example be stored in a memory of the image processing device and for example be based on the algorithm AdaBoost. Such detection algorithms are already prior art and here are not described in more detail. If the target vehicle 6 is detected, thus, it can be tracked over time by the image processing device. To this too, corresponding tracking algorithms are known.

The tracking of the target vehicle 6 over time means that the target vehicle 6 is detected in each image or in each n-th image of the image sequence and thus its current position in the respective image is known. Thus, the target vehicle 6 is tracked over the sequence of the images. The accuracy of the detection of the target vehicle 6 in the individual images thus immediately affects the accuracy of tracking.

An exemplary image 7 of the camera 3 is shown in Fig. 2. The detection algorithm detects the target vehicle 6' and outputs a partial region 8 (bounding box) as a result, in which the target vehicle 6' is depicted. The detection of the target vehicle 6' thus includes that a width w as well as a height h of the target vehicle 6' are determined, which are indicated by the partial region 8. In addition, the position x, y of the partial region 8 in the image 7 is also known. As is apparent from Fig. 2, the partial region 8 indicates the width w of the target vehicle 6' only in inaccurate manner. Thus, the relative position of the target vehicle 6 with respect to the motor vehicle 1 also can only inaccurately be determined, which in turn adversely affects the accuracy of tracking.

In order to improve the accuracy of determining the width of the target vehicle 6' in the image 7, a region of interest ROI is determined within the partial region 8, in which wheels 9, 10 of the rear axle of the target vehicle 6' are depicted. Therein, the ROI can be fixedly preset with respect to the partial region 8 and in particular present a lower area of the partial region 8.

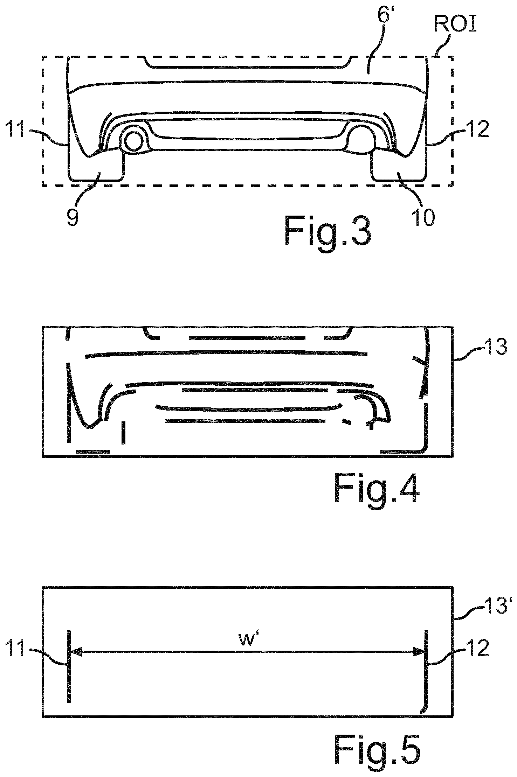

In order to determine the exact width of the depicted target vehicle 6', then, exclusively the ROI is evaluated. It is illustrated in enlarged manner in Fig. 3. In this ROI, now, respective outer edges 11, 12 of the wheels 9, 10 are searched for. Therein, the outer edges 11, 12 are the left edge 11 of the left wheel 9 as well as the right edge 12 of the right wheel 10 in the ROI. In order to detect these outer edges 11, 12, a gradient image 13 is generated from the ROI, as it is shown in Fig. 4. In order to generate the gradient image 13, for example, the Sobel operator can be applied to the ROI. Alternatively, another known edge filter can also be used. Optionally, the NMS (Non-Maximum Suppression) filtering can also be used to refine the position of the edges in the gradient image 13.

Thus, the gradient image 13 represents an edge image, in which exclusively the edges of the target vehicle 6' of the ROI are depicted. A gradient direction is respectively associated with each pixel of the gradient image 13, which specifies a direction of the brightness change at the respective pixel. The gradient direction therefore defines, into which direction the brightness changes at the respective pixel. Now, the pixels can be grouped depending on the respective gradient direction, wherein for example nine intervals of values can be defined for the gradient direction. Then, the pixels are grouped to or associated with these intervals. At the left outer edge 11, the brightness changes from bright to dark (from left to right). Thus, the pixels of the left outer edge 11 have a gradient direction of 0°. By contrast, the pixels of the right outer edge 12 have a gradient direction of 180°. If all of the pixels are now filtered out, which have another gradient direction than 0°and 180°, thus, a filtered edge image 13' according to Fig. 5 is provided, in which only the outer edges 11, 12 are depicted. The new width w' of the target vehicle 6' is now determined as the distance between the outer edges 11, 12.

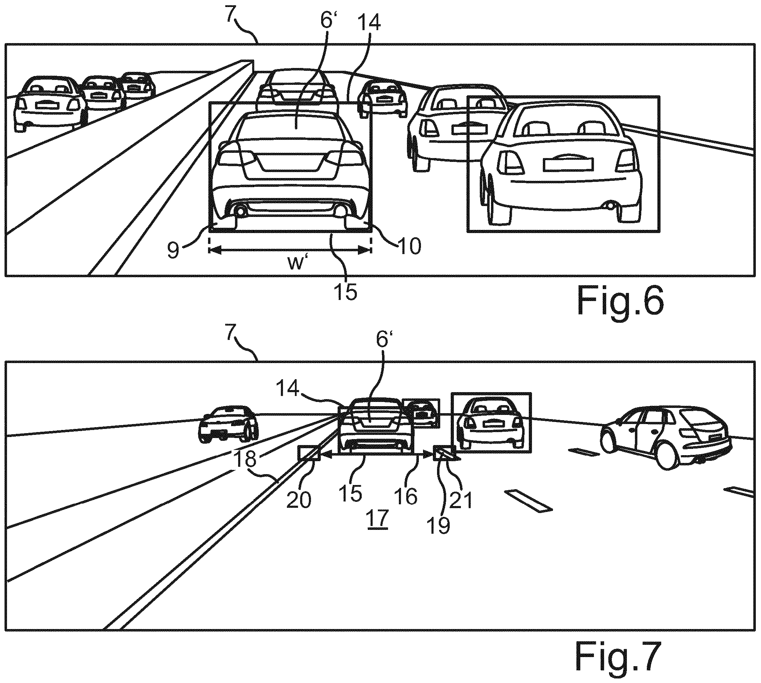

As is apparent from Fig. 6, now, a precise bounding box 14 with the width w' can be provided, by which the position of the target vehicle 6' in the image is precisely identified. Therein, a lower edge 15 of the bounding box 14 can coincide with the bottom of the wheels 9, 10.

If the exact width w' of the target vehicle 6' in the image 7 is known, thus, the real width of the target vehicle 6 can also be precisely determined. With reference now to Fig. 7, a width 16 of a lane 17 in the image 7 (in pixels), on which the target vehicle 6' is located, is determined. The width 16 of the lane 17 (in pixels) is determined on the level of the lower edge 15 of the bounding box 14. This means that the width 16 in the image 7 is determined along a line, which coincides with the lower edge 15 and thus with the bottom of the wheels 9, 10.

In order to be able to determine the width 16 of the lane 17 in the image 7, longitudinal markers 18, 19 of the roadway 5 are identified by the image processing device. The width 16 then represents a distance between the longitudinal markers 18, 19 on the level of the lower edge 15.

In determining the real width of the target vehicle 6, it is assumed that the real width of the lane 17 remains constant and thus is equal on the level of the target vehicle 6 and on the level of the motor vehicle 1. The real width of the lane 17 can also be determined on the basis of the longitudinal markers 18, 19. The real width of the lane 17 can be determined at a very close distance from the ego vehicle 1 and thus not at the level of the target vehicle 6, but directly in front of the ego vehicle 1.

The real width (in meters) of the target vehicle 6 then results from a ratio of the real width of the lane 17 (in meters) to the width 16 of the lane 17 in the image 7 (in pixels), multiplied by the width w' of the target vehicle 6' in the image (in pixels).

In order to be able to detect the longitudinal markers 18, 19 on the level of the lower edge 15, image regions 20, 21 to the left and to the right of the lower edge 15 are defined. These image regions 20, 21 are defined in those positions, in which presumably also the longitudinal markers 18, 19 are located. To this, information from a detection module for detecting longitudinal markers can also be used. The image regions 20, 21 can then be subjected to additional filtering in order to be able to more accurately detect the edges of the longitudinal markers 18, 19. For example, therein, a histogram filter and/or a Gaussian filter can be used.

## Claims

1. Method for determining a width (w') of a target vehicle (6) by means of a camera system (2) of a motor vehicle (1), wherein an image (7) of an environmental region (4) of the motor vehicle (1) is provided by a camera (3) of the camera system (2) and the width (w') of the target vehicle (6') in the image (7) is determined by an image processing device of the camera system (2), including the steps of:
- detecting the target vehicle (6') in the image (7) by means of a detection algorithm by the image processing device, wherein the detection includes that a partial region (8) of the image (7) is determined by the detection algorithm, in which the target vehicle (6') is depicted in full,
- determining a region of interest (ROI) within the partial region (8) by the image processing device such that wheels (9, 10) of a common rear axle of the target vehicle (6') are depicted in the region of interest (ROI),
- identifying respective outer edges (11, 12) of the depicted wheels (9, 10) within the region of interest (ROI), and
- determining the width (w') of the depicted target vehicle (6') as the distance between the outer edges (11, 12).

2. Method according to claim 1,
**characterized in that**
a gradient image (13) of the region of interest (ROI) is generated and the outer edges (11, 12) are identified based on the gradient image (13).

3. Method according to claim 2,
**characterized in that**
a gradient direction is respectively determined to pixels of the gradient image (13), which specifies a direction of a brightness change at the respective pixel, and the outer edges (11, 12) are identified based on the gradient direction of the pixels.

4. Method according to any one of the preceding claims,
**characterized in that**
depending on the width (w') of the target vehicle (6') in the image (7), a real width of the target vehicle (6) is determined by the image processing device.

5. Method according to claim 4,
**characterized in that**
a width (16) of a lane (17) in the image (7) on the level of the depicted target vehicle (6') is determined by the image processing device and the real width of the target vehicle (6) is determined depending on the width (16) of the lane (17) in the image (7).

6. Method according to claim 5,
**characterized in that**
longitudinal markers (18, 19) of the lane (17) in the image (7) are identified by the image processing device and the width (16) of the lane (17) in the image (7) is determined as the distance between the longitudinal markers (18, 19) in the image (7) on the level of the target vehicle (6').

7. Method according to claim 5 or 6,
**characterized in that**
the width (16) of the lane (17) in the image (7) is determined on the level of the bottom (15) of the wheels (9, 10) in the image (7).

8. Method according to any one of the claims 5 to 7,
**characterized in that**
for determining the real width of the target vehicle (6), a real width of the lane (17) is determined based on the image (7), in particular based on the longitudinal markers (18, 19).

9. Camera system (2) for a motor vehicle (1), including a camera (3) for providing an image (7) of an environmental region (4) of the motor vehicle (1), and including an image processing device for determining a width (w') of a target vehicle (6') in the image (7), wherein the image processing device is adapted to perform a method according to any one of the preceding claims.

10. Motor vehicle (1) including a camera system (2) according to claim 9.

## Patentansprüche

1. Verfahren zum Bestimmen einer Breite (w') eines Zielfahrzeugs (6) mittels eines Kamerasystems (2) eines Kraftfahrzeugs (1), wobei ein Bild (7) eines Umgebungsbereichs (4) des Kraftfahrzeugs (1) durch eine Kamera (3) des Kamerasystems (2) bereitgestellt wird und die Breite (w') des Zielfahrzeugs (6') in dem Bild (7) durch eine Bildverarbeitungsvorrichtung des Kamerasystems (2) bestimmt wird, umfassend die Schritte:
- Detektieren des Zielfahrzeugs (6') in dem Bild (7) mittels eines Detektionsalgorithmus durch die Bildverarbeitungsvorrichtung, wobei die Detektion umfasst, dass ein Teilbereich (8) des Bilds (7) durch den Detektionsalgorithmus bestimmt wird, in dem das Zielfahrzeug (6') vollständig abgebildet ist,
- Bestimmen eines Bereichs von Interesse (ROI) innerhalb des Teilbereichs (8) durch die Bildverarbeitungsvorrichtung derart, dass Räder (9, 10) einer gemeinsamen Hinterachse des Zielfahrzeugs (6') in dem Bereich von Interesse (ROI) abgebildet sind,
- Identifizieren von jeweiligen Außenkanten (11, 12) der abgebildeten Räder (9, 10) innerhalb des Bereichs von Interesse (ROI), und
- Bestimmen der Breite (w') des abgebildeten Zielfahrzeugs (6') als den Abstand zwischen den Außenkanten (11, 12).

2. Verfahren nach Anspruch 1,
**dadurch gekennzeichnet, dass**
ein Gradientenbild (13) des Bereichs von Interesse (ROI) erzeugt wird und die Außenkanten (11, 12) basierend auf dem Gradientenbild (13) identifiziert werden.

3. Verfahren nach Anspruch 2,
**dadurch gekennzeichnet, dass**
eine Gradientenrichtung jeweils zu Bildpunkten des Gradientenbilds (13) bestimmt wird, die eine Richtung einer Helligkeitsänderung bei dem jeweiligen Bildpunkt angibt, und die Außenkanten (11, 12) basierend auf der Gradientenrichtung der Bildpunkte identifiziert werden.

4. Verfahren nach einem der vorhergehenden Ansprüche,
**dadurch gekennzeichnet, dass**
abhängig von der Breite (w') des Zielfahrzeugs (6') in dem Bild (7) eine reale Breite des Zielfahrzeugs (6) durch die Bildverarbeitungsvorrichtung bestimmt wird.

5. Verfahren nach Anspruch 4,
**dadurch gekennzeichnet, dass**
eine Breite (16) einer Fahrspur (17) in dem Bild (7) auf der Höhe des abgebildeten Zielfahrzeugs (6') durch die Bildverarbeitungsvorrichtung bestimmt wird und die reale Breite des Zielfahrzeugs (6) abhängig von der Breite (16) der Fahrspur (17) in dem Bild (7) bestimmt wird.

6. Verfahren nach Anspruch 5,
**dadurch gekennzeichnet, dass**
Längsmarkierungen (18, 19) der Fahrspur (17) in dem Bild (7) durch die Bildverarbeitungsvorrichtung identifiziert werden und die Breite (16) der Fahrspur (17) in dem Bild (7) als der Abstand zwischen den Längsmarkierungen (18, 19) in dem Bild (7) auf der Höhe des Zielfahrzeugs (6') bestimmt wird.

7. Verfahren nach Anspruch 5 oder 6,
**dadurch gekennzeichnet, dass**
die Breite (16) der Fahrspur (17) in dem Bild (7) auf der Höhe der Unterseite (15) der Räder (9, 10) in dem Bild (7) bestimmt wird.

8. Verfahren nach einem der Ansprüche 5 bis 7,
**dadurch gekennzeichnet, dass**
zum Bestimmen der realen Breite des Zielfahrzeugs (6) eine reale Breite der Fahrspur (17) basierend auf dem Bild (7), insbesondere basierend auf den Längsmarkierungen (18, 19), bestimmt wird.

9. Kamerasystem (2) für ein Kraftfahrzeug (1), umfassend eine Kamera (3) zum Bereitstellen eines Bilds (7) eines Umgebungsbereichs (4) des Kraftfahrzeugs (1), und umfassend eine Bildverarbeitungsvorrichtung zum Bestimmen einer Breite (w') eines Zielfahrzeugs (6') in dem Bild (7), wobei die Bildverarbeitungsvorrichtung dazu ausgelegt ist, ein Verfahren nach einem der vorhergehenden Ansprüche durchzuführen.

10. Kraftfahrzeug (1), umfassend ein Kamerasystem (2) nach Anspruch 9.

## Revendications

1. Procédé de détermination d'une largeur (w') d'un véhicule cible (6) au moyen d'un système de caméra (2) d'un véhicule à moteur (1), dans lequel une image (7) d'une région environnante (4) du véhicule à moteur (1) est fournie par une caméra (3) du système de caméra (2) et la largeur (w') du véhicule cible (6') dans l'image (7) est déterminée par un dispositif de traitement d'images du système de caméra (2), incluant les étapes de :
- détection du véhicule cible (6') dans l'image (7) au moyen d'un algorithme de détection par le dispositif de traitement d'images, dans lequel la détection inclut qu'une région partielle (8) de l'image (7) est déterminée par l'algorithme de détection, dans lequel le véhicule cible (6') est représenté en intégralité,
- détermination d'une région d'intérêt (ROI) à l'intérieur de la région partielle (8) par le dispositif de traitement d'images de telle sorte que des roues (9, 10) d'un essieu arrière commun du véhicule cible (6') sont représentées dans la région d'intérêt (ROI),
- identification de bords extérieurs (11, 12) respectifs des roues (9, 10) représentées à l'intérieur de la région d'intérêt (ROI), et
- détermination de la largeur (w') du véhicule cible (6') représenté comme étant égale à la distance entre les bords extérieurs (11, 12).

2. Procédé selon la revendication 1,
**caractérisé en ce que**
une image gradient (13) de la région d'intérêt (ROI) est générée et les bords extérieurs (11, 12) sont identifiés sur la base de l'image gradient (13).

3. Procédé selon la revendication 2,
**caractérisé en ce que**
une direction de gradient est déterminée respectivement à des pixels de l'image gradient (13), qui spécifie une direction d'un changement de luminosité au niveau du pixel respectif, et les bords extérieurs (11, 12) sont identifiés sur la base de la direction de gradient des pixels.

4. Procédé selon l'une quelconque des revendications précédentes,
**caractérisé en ce que**
en fonction de la largeur (w') du véhicule cible (6') dans l'image (7), une largeur réelle du véhicule cible (6) est déterminée par le dispositif de traitement d'images.

5. Procédé selon la revendication 4,
**caractérisé en ce que**
une largeur (16) d'une voie (17) dans l'image (7) au niveau du véhicule cible (6') représenté est déterminée par le dispositif de traitement d'images et la largeur réelle du véhicule cible (6) est déterminée en fonction de la largeur (16) de la voie (17) dans l'image (7).

6. Procédé selon la revendication 5,
**caractérisé en ce que**
des marqueurs longitudinaux (18, 19) de la voie (17) dans l'image (7) sont identifiés par le dispositif de traitement d'images et la largeur (16) de la voie (17) dans l'image (7) est déterminée comme étant égale à la distance entre les marqueurs longitudinaux (18, 19) dans l'image (7) au niveau du véhicule cible (6').

7. Procédé selon la revendication 5 ou 6,
**caractérisé en ce que**
la largeur (16) de la voie (17) dans l'image (7) est déterminée au niveau de la partie inférieure (15) des roues (9, 10) dans l'image (7).

8. Procédé selon l'une quelconque des revendications 5 à 7,
**caractérisé en ce que**
pour déterminer la largeur réelle du véhicule cible (6), une largeur réelle de la voie (17) est déterminée sur la base de l'image (7), en particulier sur la base des marqueurs longitudinaux (18, 19).

9. Système de caméra (2) pour un véhicule à moteur (1), incluant une caméra (3) pour fournir une image (7) d'une région environnante (4) du véhicule à moteur (1), et incluant un dispositif de traitement d'images pour déterminer une largeur (w') d'un véhicule cible (6') dans l'image (7), dans lequel le dispositif de traitement d'images est adapté pour réaliser un procédé selon l'une quelconque des revendications précédentes.

10. Véhicule à moteur (1) incluant un système de caméra (2) selon la revendication 9.
